# FASCICULE DE BREVET EUROPEEN

(11) **EP 1 343 605 B1**
(45) Date de publication et mention de la délivrance du brevet: **15.02.2006**
(21) Numéro de dépôt: 01994881.9
(22) Date de dépôt: 17.12.2001
(51) Int. Cl.: B23K 1/008

(54) **PROCEDE DE BRASURE SOUS GAZ INERTE D'UN PRODUIT PLAQUE COMPORTANT UNE PIECE SUPPORT EN ACIER ET UN REVETEMENT METALLIQUE ANTI-CORROSION**
VERFAHREN ZUM SCHÜTZGASLÖTEN EINES GALVANISCH BEHANDELTEN PRODUKTS MIT EINEM STAHLTRÄGERBAUTEIL UND EINER ROSTSCHUTZ-METALLBESCHICHTUNG
METHOD FOR BRAZING UNDER INERT GAS A PLATED PRODUCT COMPRISING A STEEL SUPPORT COMPONENT AND AN ANTI-CORROSIVE METAL COATING

(30) Priorité: 22.12.2000 FR 0016897
(43) Date de publication de la demande: 17.09.2003
(73) Titulaire: Le Carbone Lorraine, 92400 Courbevoie (FR)
(72) Inventeur: TOTINO, Ernest, F-57130 Sainte Ruffine (FR); HUG, Christian, F-57950 Montigny les Metz (FR)
(74) Mandataire: Fénot, Dominique
(86) Numéro de dépôt international: PCT/FR2001/004016
(87) Numéro de publication internationale: WO 2002/051576

(56) Documents cités:
- FR-A- 2 414 975
- FR-A- 2 690 860
- US-A- 4 291 104
- OLIVIER BRAUN ET AL.: "Vakuumlöten, ein Fügeverfahren mit Vorteilen" TECHNISCHE RUNDSCHAU, vol. 80, no. 42, 14 octobre 1988 (1988-10-14), pages 42-43, XP000023097 bern ( CH )
- BAUER: "LOöten und Härten von Bauteilen und Werkzeugen in Vakuumanlagen" HÄRTEREI-TECHNISCHE MITTEILUNGEN, vol. 36, no. 2, avril 1981 (1981-04), pages 81-85, XP002176570 München ( DE )
- BOUGHTON ET AL.: "Furnace brazing-2: a survey of modern processes and plant" WELDING AND METAL FABRICATION, avril 1973 (1973-04), pages 120-138, XP002176571

## Description

L'invention concerne les dispositifs de manipulation, de stockage et de traitement de produits chimiques destinés aux industries chimiques. Elle concerne en particulier les mélangeurs, les dispositifs de traitement et les dispositifs d'acheminement aptes à manipuler des produits hautement corrosifs, tels que des acides ou bases concentrés. Dans la présente demande, l'expression "élément de dispositif chimique" désigne notamment, de manière collective, les enceintes de stockage, les réservoirs, les échangeurs de chaleur, les réacteurs, les mélangeurs, les dispositifs de traitement et les dispositifs d'acheminement.

L'invention concerne plus spécifiquement un procédé de fabrication d'une pièce d'assemblage ou d'un élément de dispositif chimique d'une pièce d'assemblage comprenant au moins une pièce support en acier et un revêtement métallique. anti-corrosion conformément au préambule de la revendication 1 (voir, par exemple, US-A-4 291 104).

### Etat de la technique

Les industries chimiques utilisent de nombreux éléments de dispositif chimique qui sont susceptibles de manipuler, stocker et/ou traiter des produits chimiques hautement corrosifs et qui doivent par conséquent être aptes à résister à l'attaque de ces derniers.

Afin de garantir une bonne tenue à la corrosion, les éléments de dispositif chimique comportent le plus souvent des pièces de support en acier et un revêtement métallique anti-corrosion à base de métaux dits « nobles », tels que du titane, du tantale, du zirconium, un alliage base nickel ou de l'acier inoxydable. Les éléments de dispositif chimique peuvent être fabriqués par assemblage de pièces d'assemblage, telles que des plaques, préalablement revêtues d'un revêtement métallique anti-corrosion. Le revêtement anti-corrosion peut être fixé à la pièce de support de différentes manières, telles que par moletage, explosion (« explosion clad »), calandrage à chaud ou simple habillage sans jonction entre la plaque et le revêtement anti-corrosion.

Certaines applications, telles que les dispositifs sous faible pression interne, nécessitent une liaison forte entre la pièce de support en acier et le revêtement anti-corrosion, c'est-à-dire une liaison qui présente une grande résistance à l'arrachement, de manière à éviter la séparation entre ceux-ci qui pourrait, par exemple, conduire à un affaissement (« collapsing » en anglais) du revêtement anti-corrosion. Le moletage, l'explosion clad et le calandrage permettent d'obtenir des liaisons pièce/revêtement très fortes mais ces techniques ne peuvent être utilisées lorsque l'épaisseur du revêtement anti-corrosion est inférieure à 0,7 mm.

La demanderesse a donc recherché une méthode susceptible d'implantation industrielle pour fixer solidement un revêtement anti-corrosion de faible épaisseur sur une pièce de support en acier.

### Objet de l'invention

L'invention a pour objet un procédé de fabrication d'une pièce d'assemblage ou d'un élément de dispositif chimique comprenant une pièce support en acier et un revêtement métallique anti-corrosion tel que défini dans la revendication 1.

La demanderesse a constaté que le procédé de l'invention permet de fixer solidement sur une pièce métallique en acier un revêtement anti-corrosion ayant une épaisseur inférieure à 1 mm, voire inférieure à 0,5 mm, éventuellement inférieure ou égale à 0,3 mm.

### Figures

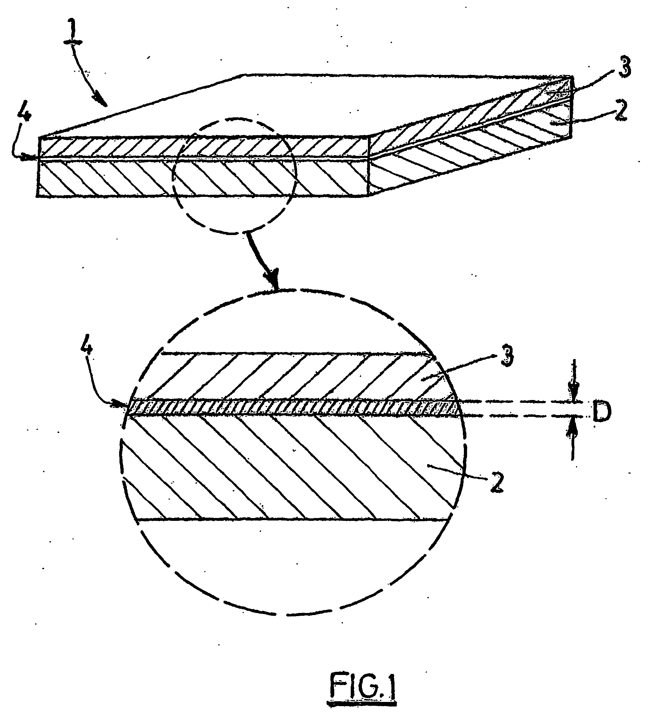

La figure 1 illustre de manière schématique un produit plaqué selon l'invention.

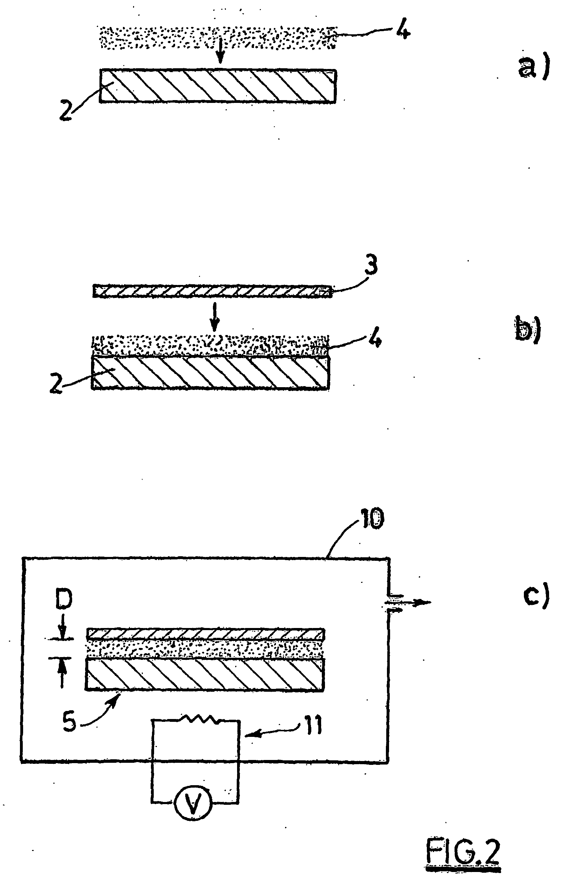

La figure 2 illustre de manière schématique un mode de réalisation du procédé de l'invention.

### Description de l'invention

Selon l'invention, le procédé de fabrication d'un produit plaqué (1) comportant une pièce support en acier (2) et un revêtement métallique anti-corrosion (3) est caractérisé en ce qu'il comprend au moins une opération de brasage sous atmosphère contrôlée, en utilisant au moins un matériau de brasage (4), de manière à établir une jonction mécanique entre au moins une partie déterminée du support (2) et au moins une partie déterminée du revêtement (3).

Lesdites parties déterminées sont dites surfaces de liaison. La jonction entre le support et le revêtement peut être établie par plusieurs surfaces de liaisons. La ou les surfaces de liaisons sont avantageusement préalablement traitées, avant l'opération de brasage, de manière, notamment, à éliminer les oxydes de surface. On peut, par exemple, effectuer au moins un traitement choisi parmi les traitements chimiques, électrochimiques, physico-chimiques et mécaniques (tels qu'un décapage chimique ou électrochimique, un usinage ou un ponçage). Ces traitements peuvent être combinés.

Afin d'augmenter la solidité de la jonction, le procédé selon l'invention peut également comprendre le dépôt d'au moins une couche apte à améliorer l'accrochage du matériau de brasage. Le dépôt peut être effectué par voie chimique, par voie électrolytique ou en phase vapeur (dépôt chimique en phase vapeur ou physique en phase vapeur). Ladite couche est typiquement métallique, par exemple du titane ou du cuivre. Le dépôt peut être effectué sur la pièce support (2), sur le revêtement métallique (3), ou les deux. Le dépôt est effectué avant l'opération de brasage.

L'opération de brasage comprend le rapprochement des dites parties déterminées de manière à obtenir un espacement D qui est de préférence choisi de manière à éviter la formation de bulles de gaz ou de défauts de liaison entre les surfaces de liaison durant l'opération de brasage. L'espacement D est typiquement inférieur à 0,1 mm. La valeur souhaitée pour l'espacement D est obtenue par application d'une pression de plaquage sur le support et le revêtement.

L'atmosphère contrôlée est un gaz inerte (tel qu'un gaz rare (typiquement de l'argon ou de l'hélium) ou de l'azote, ou un mélange de ceux-ci).

Dans le mode de réalisation de l'invention, ladite opération de brasage sous atmosphère contrôlée comprend :
- l'interposition d'au moins un matériau de brasage (4) entre la pièce de support en acier (2) et le revêtement anti-corrosion (3), de manière à former un assemblage initial (5) ;
- l'application d'une pression de plaquage sur ledit assemblage initial (5) ;
- l'introduction de l'assemblage initial dans une chambre à atmosphère contrôlée, (10) munie de moyen de chauffage (11) tels qu'une résistance ;
- le contrôle de l'atmosphère dans la chambre (10) (et donc au voisinage dudit assemblage), par le remplacement de l'atmosphère dans ladite chambre par un gaz inerte ;
- le réchauffement dudit ensemble (5) jusqu'à une température au moins égale à la température de brasage dudit matériau de brasage (4).

La température de brasage, qui est typiquement égale à la température de fusion du matériau de brasage, est telle que le matériau fond et produit une liaison intime avec l'élément avec lequel il est en contact (pièce de support en acier et/ou revêtement anti-corrosion).

Le matériau de brasage est de préférence réparti uniformément entre la pièce de support et le revêtement anti-corrosion afin d'obtenir une couche de liaison uniforme et d'augmenter la surface de contact entre ces deux éléments.

L'interposition du matériau de brasage (4) entre la pièce de support (2) et le revêtement anti-corrosion (3) peut être faite en deux étapes. En particulier, l'interposition peut comprendre :
- le dépôt du matériau de brasage (4) sur la pièce de support (2), au droit de la surface dite « de liaison » ;
- le positionnement du revêtement anti-corrosion (3) sur la pièce de support (2), de manière à former ledit assemblage initial (5).

Dans certains cas, il peut être avantageux d'effectuer d'abord le dépôt du matériau de brasage (4) sur le revêtement anti-corrosion (3), au droit de la surface dite « de liaison », et de positionner ensuite la pièce de support (2) sur le revêtement anti-corrosion, de manière à former ledit assemblage initial (5).

Une pression mécanique de plaquage est appliquée sur ledit assemblage avant et/ou durant ledit réchauffement. Cette pression de plaquage est exercée de façon à ce que la pièce de support et le revêtement anti-corrosion soient serrées l'un contre l'autre et de façon à comprimer le matériau de brasage.

Le revêtement métallique anti-corrosion (3) est en titane, en un alliage de titane, en tantale, en un alliage de tantale, en zirconium ou en un alliage de zirconium.

Le matériau de brasage (4) peut être un alliage fusible (typiquement un alliage eutectique) ou un métal fusible. Ledit matériau (4) contient éventuellement un flux. Il est avantageux que le matériau de brasage puisse diffuser dans l'élément avec lequel il est en contact, ce qui permet d'assurer une liaison très forte entre lesdits éléments. Le matériau de brasage se présente typiquement sous forme de poudre, d'un feuillard ou d'un treillis. Dans ses essais, la demanderesse a constaté que le treillis présente l'avantage de compenser efficacement les éventuelles variations de l'espacement D entre les surfaces de liaison.

Lorsque le revêtement (3) est du tantale ou un alliage de tantale, le matériau de brasage (4) est typiquement composé de nickel, de chrome, de silicium ou de bore ou un mélange ou un alliage de ceux-ci, tel qu'un alliage de type BNi contenant du nickel et du bore (selon la classification ASTM), tel que Ni-14Cr-3B-4,5Si-4Fe, Ni-7Cr-3B-4,5Si-3Fe ou Ni-2B-3,5Si-1,5Fe. Dans ces cas, la température de brasage se situe typiquement entre 1000 et 1050°C. Le matériau de brasage (4) peut être également un matériau (tel qu'un alliage ou un mélange) à base d'argent contenant du lithium, du cuivre, de l'aluminium, du zinc et/ou de l'étain.

Lorsque le revêtement (3) est du titane ou un alliage de titane, le matériau de brasage (4) est typiquement un matériau (tel qu'un alliage ou un mélange) à base d'argent contenant du lithium, du cuivre, de l'aluminium, du zinc et/ou de l'étain, ou un alliage à base de titane, tel que TiNi, TiZrBe, 48Ti-48Zr-4Be ou 43Ti-43Zr-12Ni-2Be.

Lorsque le revêtement (3) est du zirconium ou un alliage de zirconium, le matériau de brasage (4) est typiquement un alliage à base de zirconium, de cuivre ou de nickel, tel que Zr-5Be, Cu-20Pd-3In, Ni-20Pd-10Si, Ni-30Ge-13Cr ou Ni-6P. Le matériau de brasage (4) peut être également un matériau (tel qu'un alliage ou un mélange) à base d'argent contenant du lithium, du cuivre, de l'aluminium, du zinc et/ou de l'étain.

Les pièces de support en acier et les revêtements anti-corrosion peuvent prendre la forme de plaques. Ces éléments, qui peuvent être découpées préalablement, sont typiquement planes, mais elles peuvent être de formes bombées, semi-cylindriques ou autre. Les éléments peuvent également être mis en forme avant d'être réunies par brasage. Il est également possible d'effectuer le brasage sur un élément de dispositif chimique à l'aide de revêtements métalliques anti-corrosion ayant une forme appropriée.

L'acier utilisé est généralement un acier au carbone, et de préférence un acier au chrome. Il est particulièrement avantageux d'utiliser un acier dont le coefficient de dilatation thermique est proche de celui du revêtement anti-corrosion, c'est-à-dire que, avantageusement, la différence entre le coefficient de dilatation thermique dudit acier et le coefficient de dilatation du revêtement anti-corrosion est inférieure à 20 %, et de préférence inférieure à 10 %. Plus précisément, le coefficient de dilatation thermique dudit acier est égal à celui dudit revêtement ± 20 %, et de préférence ±10%.

La pièce support (2) et/ou le revêtement anti-corrosion peuvent se présenter sous forme de plaque ou de tôle.

Ledit produit plaqué (1) peut être une pièce d'assemblage ou un élément de dispositif chimique.

### Exemples, présentés a titre d'example, non couverts par l'objet des revendications définissant l'invention.

### Essais 1

Des essais de fabrication, par brasage sous vide, de pièces d'assemblage ont été réalisés à partir de plaques en acier au carbone et de revêtements anti-corrosion en tantale. Le matériau de brasage était un alliage BNi de la classification ASTM, à base de nickel et contenant du bore, du chrome et du silicium.

Les valeurs de résistance à l'arrachement observées lors de ces essais se situaient entre celles obtenues sur les pièces d'assemblages produites par explosion clad et celles obtenues sur des pièces d'assemblage produites par moletage.

La demanderesse a constaté que la profondeur de diffusion du matériau de brasage dans l'élément en tantale était de l'ordre de 10 à 20 µm, de sorte que la résistance à la corrosion du revêtement de tantale n'est pas affectée par cette diffusion.

### Essais 2

Des essais de fabrication, par brasage sous vide, de pièces d'assemblage ont également été réalisés à partir de plaques en acier au carbone et de revêtements anti-corrosion soit en tantale, soit en titane, en utilisant un matériau de brasage à base d'argent et de cuivre.

Des tests de pliage et de poinçonnage (rayon de courbure variant de 30 mm à 100 mm) ont montré l'absence de rupture ou de décohésion du joint de brasage qui présentait une dureté relativement basse (110 Hv). Par ailleurs, un calandrage sur des plaques de titane de dimensions (1 m x 1 m) a été réalisé, avec un rayon de courbure de 150 mm, sans altération de la qualité de la jonction (même au niveau microscopique).

De plus, la demanderesse a constaté une profondeur de diffusion du matériau de brasage (4) inférieur à 60 µm dans le revêtement anti-corrosion (3), de sorte que la résistance à la corrosion n'est pas affectée par cette diffusion.

### Avantages de l'invention

Les produits plaqués qui sont obtenus avec le procédé de l'invention présentent l'avantage d'une grande conductivité thermique transversale grâce à une liaison étroite entre pièce de support et revêtement anti-corrosion sur la plus grande partie de la surface de liaison, ce qui n'est pas le cas d'une liaison obtenue, par exemple, par moletage qui ne produit que des cordons de liaison. Une conductivité thermique transversale est particulièrement avantageuse dans les dispositifs chimiques comprenant des moyens de transfert thermique tels qu'un échangeur ou une double enveloppe de refroidissement ou de chauffage.

## Revendications

1. Procédé de fabrication d'une pièce d'assemblage ou d'un élément de dispositif chimique comportant une pièce support en acier (2) et un revêtement métallique anti-corrosion (3) en un matériau appartenant au groupe regroupant le tantale et ses alliages, le titane et ses alliages et le zirconium et ses alliages, comprenant au moins une opération de brasage sous atmosphère contrôlée, en utilisant au moins un matériau de brasage (4), de manière à établir une jonction mécanique entre au moins une partie déterminée du support (2) et au moins une partie déterminée du revêtement (3), lesdites parties déterminées de la pièce support et du revêtement étant par la suite également appelées surfaces de liaison, ladite opération de brasage comprenant :
- l'interposition d'au moins un matériau de brasage (4) entre au moins une partie déterminée de la pièce support (2) et au moins une partie déterminée du revêtement anti-corrosion (3), de manière à former un assemblage initial (5) ;
- l'introduction de l'assemblage initial dans une chambre à atmosphère contrôlée (10) munie de moyen de chauffage (11);
- le réchauffement dudit ensemble (5) jusqu'à une température au moins égale à la température de brasage dudit matériau de brasage (4).
**caractérisé en ce** l'operation de brasage comprend le remplacement de l'atmosphère dans ladite chambre par un gaz inerte et une pression de plaquage est exercée sur ledit assemblage initial (5) avant et/ou durant ledit réchauffement de façon à ce que la pièce de support et le revêtement anti-corrosion soient serrés l'un contre l'autre et de façon à comprimer ledit matériau de brasage.

2. Procédé de fabrication selon la revendication 1, **caractérisé en ce que** l'opération de brasage comprend le rapprochement des dites surfaces de liaison de manière à obtenir un espacement D inférieure à 0,1 mm.

3. Procédé de fabrication selon la revendication 1 ou 2, dans lequel ladite atmosphère contrôlée est un gaz inerte choisi dans le groupe comprenant les gaz rares, l'azote et les mélanges de ceux-ci.

4. Procédé de fabrication selon l'une quelconque des revendications 1 à 3, comprenant en outre, préalablement au brasage, au moins un traitement des surfaces de liaison choisi dans le groupe comprenant les traitements chimiques, électrochimiques, physico-chimiques, mécaniques et les combinaisons de ceux-ci.

5. Procédé de fabrication selon l'une quelconque des revendications 1 à 4, **caractérisé en ce qu'**il comprend en outre le dépôt d'au moins une couche apte à améliorer l'accrochage du matériau de brasage.

6. Procédé de fabrication selon la revendication 5, **caractérisé en ce que** ladite couche est métallique et **en ce que** le dépôt est effectué par voie chimique, par voie électrolytique ou en phase vapeur.

7. Procédé de fabrication selon l'une quelconque des revendications 1 à 6, **caractérisé en ce que** l'épaisseur dudit revêtement (3) est inférieure à 1 mm.

8. Procédé de fabrication selon l'une quelconque des revendications 1 à 7, **caractérisé en ce qu'**on effectue le dépôt du matériau de brasage (4) sur le revêtement anti-corrosion (3), au droit de ladite surface de liaison et **en ce qu'**on positionne ensuite la pièce de support sur le revêtement anti-corrosion, de manière à former ledit assemblage initial (5).

9. Procédé de fabrication selon l'une quelconque des revendications 1 à 8, **caractérisé en ce que** ledit revêtement (3) est en tantale ou en un alliage de tantale et **en ce que** le matériau de brasage (4) est un matériau contenant du nickel et du bore.

10. Procédé de fabrication selon l'une quelconque des revendications 1 à 8, **caractérisé en ce que** ledit revêtement (3) est en titane ou en un alliage de titane et **en ce que** le matériau de brasage (4) est un alliage à base de titane.

11. Procédé de fabrication selon l'une quelconque des revendications 1 à 8, **caractérisé en ce que** ledit revêtement (3) est en zirconium ou en un alliage de zirconium et **en ce que** le matériau de brasage (4) est un alliage à base de zirconium, de cuivre ou de nickel.

12. Procédé de fabrication selon l'une quelconque des revendications 1 à 8, **caractérisé en ce que en ce que** ledit revêtement (3) est en tantale ou en un alliage de tantale, en titane ou en un alliage de titane ou encore en zirconium ou en un alliage de zirconium et **en ce que** le matériau de brasage (4) est un matériau à base d'argent contenant du lithium, du cuivre, de l'aluminium, du zinc et/ou de l'étain.

13. Procédé de fabrication selon l'une quelconque des revendications 1 à 12, **caractérisé en ce que** le matériau de brasage se présente sous forme de poudre, d'un feuillard ou d'un treillis.

14. Procédé de fabrication selon l'une quelconque des revendications 1 à 13, **caractérisé en ce que** ledit acier est un acier au chrome.

15. Procédé de fabrication selon l'une quelconque des revendications 1 à 14, **caractérisé en ce que** la différence entre le coefficient de dilatation thermique dudit acier et le coefficient de dilatation thermique dudit revêtement anti-corrosion est inférieure à 20 %.

16. Procédé de fabrication selon l'une quelconque des revendications 1 à 15, **caractérisé en ce que** ladite pièce support (2) se présente sous forme de plaque ou de tôle.

17. Procédé de fabrication selon l'une quelconque des revendications 1 à 16, **caractérisé en ce que** ledit revêtement (3) se présente sous forme de plaque ou de tôle.

## Patentansprüche

1. Verfahren zur Herstellung eines Verbindungsteils oder eines Bauelements für Chemieeinrichtungen mit einem Trägerbauteil aus Stahl (2) und einer rostschützenden Metallbeschichtung (3) aus einem Material, das zur Gruppe bestehend aus Tantal und seinen Legierungen, Titan und seinen Legierungen und Zirkonium und seinen Legierungen gehört, umfassend mindestens einen Lötvorgang unter kontrollierter Atmosphäre unter Verwendung von mindestens einem Lötwerkstoff (4) zur Herstellung einer mechanischen Verbindung zwischen mindestens einem bestimmten Teil des Trägers (2) und mindestens einem bestimmten Teil der Beschichtung (3), wobei die bestimmten Teile des Trägers und der Beschichtung nachfolgend auch Verbindungsflächen genannt werden, welcher Lötvorgang umfasst:
- das Einbringen von mindestens einem Lötwerkstoff (4) zwischen mindestens einen bestimmten Teil des Trägerbauteils (2) und mindestens einen bestimmten Teil der rostschützenden Metallbeschichtung (3), um eine Erstverbindung (5) herzustellen;
- das Einführen der Erstverbindung in eine mit Heizmitteln (11) versehene Kammer mit kontrollierter Atmosphäre (10);
- die Erwärmung der Anordnung (5) auf eine Temperatur, die mindestens der Löttemperatur des Lötwerkstoffs (4) entspricht,
**dadurch gekennzeichnet, dass** der Lötvorgang den Ersatz der Atmosphäre in der Kammer durch ein Schutzgas umfasst und vor und/oder während der Erwärmung ein Pressdruck auf die Erstverbindung (5) ausgeübt wird, um das Trägerbauteil und die rostschützende Beschichtung aneinander zu pressen und den Lötwerkstoff zu komprimieren.

2. Herstellungsverfahren nach Anspruch 1, **dadurch gekennzeichnet, dass** der Lötvorgang das Zusammenführen der Verbindungsflächen umfasst, derart, dass sich ein Abstand D kleiner als 0,1 mm ergibt.

3. Herstellungsverfahren nach Anspruch 1 oder 2, bei dem die kontrollierte Atmosphäre ein Schutzgas ist, das aus der Gruppe bestehend aus den Edelgasen, Stickstoff und deren Gemischen gewählt wird.

4. Herstellungsverfahren nach irgendeinem der Ansprüche 1 bis 3, welches vor dem Löten zusätzlich mindestens eine Behandlung der Verbindungsflächen umfasst, welche Behandlung aus der Gruppe der chemischen, elektrochemischen, physikalisch-chemischen und mechanischen Behandlungen und deren Kombinationen gewählt wird.

5. Herstellungsverfahren nach irgendeinem der Ansprüche 1 bis 4, **dadurch gekennzeichnet, dass** es zusätzlich die Abscheidung mindestens einer Schicht umfasst, welche das Haften des Lötwerkstoffs zu verbessern vermag.

6. Herstellungsverfahren nach Anspruch 5, **dadurch gekennzeichnet, dass** die Schicht metallisch ist und die Abscheidung chemisch, elektrolytisch oder aus der Dampfphase erfolgt.

7. Herstellungsverfahren nach irgendeinem der Ansprüche 1 bis 6, **dadurch gekennzeichnet, dass** die Dicke der Beschichtung (3) geringer als 1 mm ist.

8. Herstellungsverfahren nach irgendeinem der Ansprüche 1 bis 7, **dadurch gekennzeichnet, dass** die Abscheidung des Lötwerkstoffs (4) auf die korrosionsschützende Beschichtung (3) auf gleicher Höhe mit der Verbindungsfläche durchgeführt wird und das Trägerbauteil anschließend auf die rostschützende Beschichtung platziert wird, um die Erstverbindung (5) herzustellen.

9. Herstellungsverfahren nach irgendeinem der Ansprüche 1 bis 8, **dadurch gekennzeichnet, dass** die Beschichtung (3) aus Tantal oder einer Tantallegierung besteht und der Lötwerkstoff (4) ein nickel- und borhaltiger Werkstoff ist.

10. Herstellungsverfahren nach irgendeinem der Ansprüche 1 bis 8, **dadurch gekennzeichnet, dass** die Beschichtung (3) aus Titan oder einer Titanlegierung besteht und der Lötwerkstoff (4) eine Legierung auf Basis von Titan ist

11. Herstellungsverfahren nach irgendeinem der Ansprüche 1 bis 8, **dadurch gekennzeichnet, dass** die Beschichtung (3) aus Zirkonium oder einer Zirkoniumlegierung besteht und der Lötwerkstoff (4) eine Legierung auf Basis von Zirkonium, Kupfer oder Nickel ist.

12. Herstellungsverfahren nach irgendeinem der Ansprüche 1 bis 8, **dadurch gekennzeichnet, dass** die Beschichtung (3) aus Tantal oder einer Tantallegierung, aus Titan oder einer Titanlegierung oder aus Zirkonium oder einer Zirkoniumlegierung besteht und der Lötwerkstoff (4) ein Werkstoff auf Basis von Silber ist, der Lithium, Kupfer, Aluminium, Zink und/oder Zinn enthält.

13. Herstellungsverfahren nach irgendeinem der Ansprüche 1 bis 12, **dadurch gekennzeichnet, dass** der Lötwerkstoff in Form von Pulver, Band oder Draht vorliegt.

14. Herstellungsverfahren nach irgendeinem der Ansprüche 1 bis 13, **dadurch gekennzeichnet, dass** der Stahl ein Chromstahl ist.

15. Herstellungsverfahren nach irgendeinem der Ansprüche 1 bis 14, **dadurch gekennzeichnet, dass** die Differenz zwischen dem Wärmeausdehnungskoeffizienten des Stahls und dem Wärmeausdehnungskoeffizienten der rostschützenden Metallbeschichtung weniger als 20 % beträgt.

16. Herstellungsverfahren nach irgendeinem der Ansprüche 1 bis 15, **dadurch gekennzeichnet, dass** das Trägerbauteil (2) als Platte oder Blech ausgebildet ist.

17. Herstellungsverfahren nach irgendeinem der Ansprüche 1 bis 16, **dadurch gekennzeichnet, dass** die Beschichtung (3) als Platte oder Blech ausgebildet ist.

## Claims

1. Process for manufacturing an assembly part or a chemical device element comprising a support part (2) of steel and an anticorrosion metallic coating (3), of a material belonging to the group comprising tantalum and tantalum alloys, titanium and titanium alloys and zirconium and zirconium alloys, comprising at least one brazing operation under controlled atmosphere, where at least one brazing material (4) is used, in such a way as to establish a mechanical bond between at least one defined part of the support (2) and at least one defined part of the coating (3), said both defined support part and defined coating part being later called also bonding surfaces, said brazing operation comprising:
- interposing at least one brazing material (4) between at least one defined part of the support (2) and at least one defined part of the anticorrosion coating (3), in such a way as to form an initial assembly (5);
- introducing the initial assembly into a controlled-atmosphere chamber (10) provided with heating means (11) ;
- heating said assembly (5) up to a temperature at least equal to the brazing temperature of said brazing material (4),
said process being **characterized in that** the brazing operation comprises replacing the atmosphere in said chamber with an inert gas and a plating pressure is applied on said initial assembly (5) before and/or during said heating so that the support and the anticorrosion coating are tightened against each other and so as to compress the brazing material.

2. Manufacturing process according to Claim 1, **characterized in that** the brazing operation comprises bringing said bonding surfaces closer together in such a way as to obtain a space D less than 0.1 mm.

3. Manufacturing process according to Claim 1 or 2, **characterized in that** said controlled atmosphere is an inert gas selected from the group comprising rare gases, nitrogen and mixtures thereof.

4. Manufacturing process according to any one of Claims 1 to 3, **characterized in that** it further comprises before the brazing operation at least one treatment of the bonding surfaces selected from the group comprising the chemical treatments, the electrochemical treatments, the physico-chemical treatments, the mechanical treatments and the combinations thereof.

5. Manufacturing process according to any one of Claims 1 to 4, **characterized in that** it further comprises depositing at least one layer capable of improving the tying of the brazing material.

6. Manufacturing process according to Claim 5, **characterized in that** said layer is metallic and **in that** the deposition is effected by chemical means, electrolytic means or in vapor phase.

7. Manufacturing process according to any one of Claims 1 to 6, **characterized in that** the thickness of said coating (3) is less than 1 mm.

8. Manufacturing process according to any one of Claims 1 to 7, **characterized in that** the brazing material (4) is deposited on the anticorrosion coating part (3), at the location of the bonding surface and **in that** the support part (2) is afterwards positioned on the anticorrosion coating (3) in such a way as to form said initial assembly (5).

9. Manufacturing process according to any one of Claims 1 to 8, **characterized in that** said coating (3) is in tantalum or in an alloy of tantalum and **in that** the brazing material (4) comprises nickel and boron.

10. Manufacturing process according to any one of Claims 1 to 8, **characterized in that** said coating (3) is in titanium or in an alloy of titanium and **in that** the brazing material (4) is an alloy with a titanium base.

11. Manufacturing process according to any one of Claims 1 to 8, **characterized in that** said coating (3) is in zirconium or in an alloy of zirconium and **in that** the brazing material (4) is an alloy with a base of zirconium, copper or nickel.

12. Manufacturing process according to any one of Claims 1 to 8, **characterized in that** said coating (3) is in tantalum or in an alloy of tantalum, in titanium or in an alloy of titanium or in zirconium or in an alloy of zirconium and **in that** the brazing material (4) is a silver-based material containing lithium, copper, aluminium, zinc and/or tin.

13. Manufacturing process according to any one of Claims 1 to 12, **characterized in that** the brazing material comes in the form of powder, a sheet or a mesh.

14. Manufacturing process according to any one of Claims 1 to 13, **characterized in that** said steel is a chromium steel.

15. Manufacturing process according to any one of Claims 1 to 14, **characterized in that** the difference between the thermal expansion coefficient of said steel and the thermal expansion coefficient of said anticorrosion coating is less than 20%.

16. Manufacturing process according to any one of Claims 1 to 15, **characterized in that** said support part (2) is in the form of a plate or sheet.

17. Manufacturing process according to any one of Claims 1 to 16, **characterized in that** said coating (3) is in the form of a plate or sheet.
